# EUROPÄISCHE PATENTSCHRIFT

(11) **EP 0 464 246 B1**
(45) Veröffentlichungstag und Bekanntmachung des Hinweises auf die Patenterteilung: **15.03.1995**
(21) Anmeldenummer: 90112783.7
(22) Anmeldetag: 04.07.1990
(51) Int. Cl.: H02M 3/335

(54) **Schaltungsanordnung für ein freischwingendes Sperrwandler-Schaltnetzteil**
Circuit arrangement for a freely oscillating flyback switching power supply
Agencement de circuit pour une alimentation à découpage du type à récupération oscillant librement

(43) Veröffentlichungstag der Anmeldung: 08.01.1992
(73) Patentinhaber: SIEMENS AKTIENGESELLSCHAFT, 80333 München (DE)
(72) Erfinder: Feldtkeller, Martin, Dipl.-Ing., D-8000 München 80 (DE)

(56) Entgegenhaltungen:
- EP-A- 0 336 725
- DE-A- 3 422 777

## Beschreibung

Die Erfindung betrifft eine Schaltungsanordnung für ein freischwingendes Sperrwandler-Schaltnetzteil mit einem ersten steuerbaren Halbleiterschaltelement zum getakteten Anlegen einer Gleichspannung an eine Primärwicklung eines Transformators, der mindestens eine erste Sekundärwicklung mit daran angeschlossener Gleichrichtereinrichtung sowie Ausgangsklemmen zum Anschluß einer Last aufweist und der periodisch mit einer vorgegebenen Magnetisierungsrichtung auf- und entmagnetisiert wird, und mit mindestens einem von einer Steuereinrichtung ansteuerbares zweiten Halbleiterschaltelement das innerhalb der Ausschaltzeit des ersten Halbleiterschaltelementes einschaltbar ist und derart in der Schaltungsanordnung angeordnet ist, daß entsprechend seiner Einschaltdauer die Magnetisierungsrichtung im Transformator umkehrbar ist.

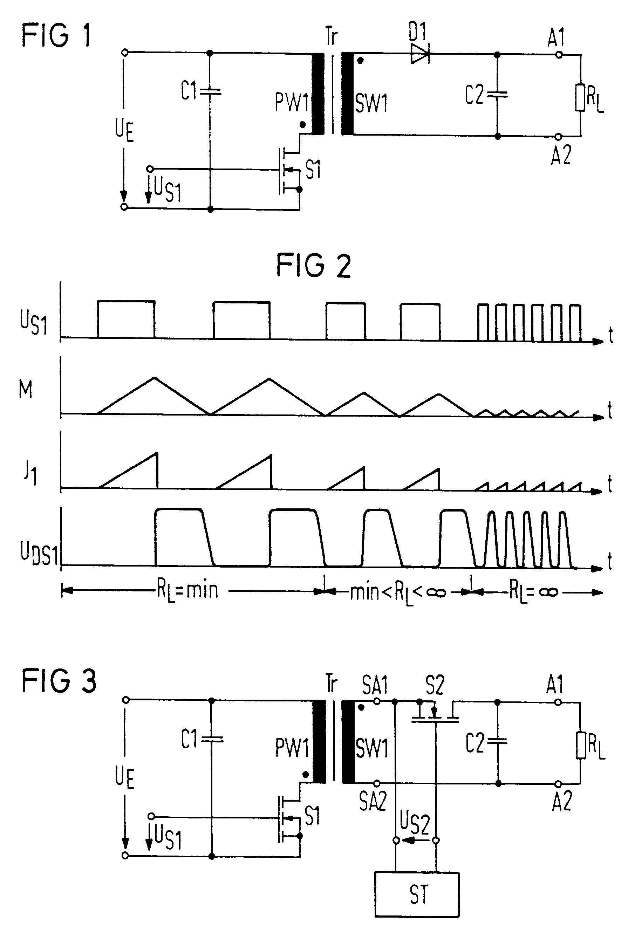

Freischwingende Sperrwandler-Schaltnetzteile weisen prinzipiell einen Transformator auf, an den primärseitig eine Gleichspannung über ein steuerbares Halbleiterschaltelement periodisch angelegt wird sowie mindestens eine sekundärseitige Gleichrichteranordnung, an deren Ausgangsklemmen eine Last angeschlossen ist. Eine Schaltungsanordnung für ein solch freischwingendes Sperrwandler-Schaltnetzteil ist in FIG 1 dargestellt. Ein solches Schaltnetzteil hat zwei sich fortlaufend abwechselnde Arbeitsphasen, die als Flußphase und Sperrphase bezeichnet werden. Während der Flußphase ist das steuerbare Halbleiterschaltelement geschlossen und es fließt Strom über das steuerbare Halbleiterschaltelement und die Primärwicklung des Transformators. Der Transformator selbst nimmt elektrische Energie auf, und speichert diese magnetisch. Man spricht dann davon, daß der Transformator aufmagnetisiert wird. Je länger die Flußphase dauert, um so mehr Energie nimmt der Transformator auf.

Während der Sperrphase unterbricht das steuerbare Halbleiterschaltelement den Stromfluß. Die Spannungen an den Transformatorwicklungen kehren sich um und der Transformator gibt die magnetisch gespeicherte Energie über die sekundärseitige Gleichrichteranordnung an die Last ab. Je höher die gespeicherte Energie war, um so länger dauert das Abfließen der Energie und damit die Sperrphase. Sobald die magnetische Energie vollständig abgebaut ist, der Transformator also entmagnetisiert ist, beginnt ein neuer Arbeitszyklus mit der nächsten Flußphase.

Der Transformator des freischwingenden Sperrwandler-Schaltnetzteiles wird im Betrieb, also periodisch auf- und entmagnetisiert und zwar mit einer vorgegebenen Magnetisierungsrichtung.

Geregelt wird das Schaltnetzteil über eine im allgemeinen als integrierter Schaltkreis ausgebildete Steuerschaltung, die die Dauer der Flußphase entsprechend der Lastbedingung einstellt. Beim Abnehmen der Last muß die Flußphase kürzer werden. Die Sperrphase wird damit auch kürzer und die Arbeitsfrequenz des Schaltnetzteiles steigt. Bei völliger Entlastung des Netzteiles, also Leerlaufbetrieb, wird theoretisch die Arbeitsfrequenz des Schaltnetzteiles unendlich groß. Aus Gründen der maximalen Schaltfrequenz des steuerbaren Halbleiterschaltelementes und aufgrund von Streukapazitäten sowie der zu höheren Frequenzen hin stärker werdenden Störstrahlung kann und darf die Arbeitsfrequenz jedoch nicht beliebig ansteigen.

Eine Möglichkeit, das Ansteigen der Arbeitsfrequenz nicht beliebig groß werden zu lassen, besteht darin, sekundärseitig an das Schaltnetzteil eine Grundlast zu schalten, die die übertragene Leistung nach unten und die Arbeitsfrequenz nach oben begrenzt. Eine solche Grundbelastung auf der Sekundärseite hat aber den Nachteil, daß Leistung verbraucht wird, die die Leistungsaufnahme des Schaltnetzteiles erhöht, ausschließlich in Wärme umgesetzt wird und zudem noch abgeführt werden muß. Die Verwendung einer Grundlast zur Begrenzung der Arbeitsfrequenz bei niedriger Belastung des Schaltnetzteiles ist beispielsweise in der Siemens-Produktinformation "Schaltnetzteile mit der IS TDA 4600", Seite 7, linke Spalte, beschrieben.

In der europäischen Offenlegungsschrift EP 0 336 725 ist ein Schaltnetzteil gezeigt, das sekundärseitig einen Schalter aufweist, der parallel zur Gleichrichterdiode liegt. Der Schalter wird derart gesteuert, daß er während der Sperrphase des primärseitigen Schalters eingeschaltet ist. Dadurch kehrt sich die Magnetisierung im Transformator während der Sperrphase um.

Der Erfindung liegt die Aufgabe zugrunde, eine Schaltungsanordnung für ein freischwingendes Sperrwandler-Schaltnetzteil anzugeben, bei dem im Leerlaufbetrieb ein Ansteigen der Arbeitsfrequenz des Schaltnetzteiles einen vorgebbaren Wert nicht überschreitet, nur ein geringer Leistungsverlust im Schaltnetzteil entsteht und die schaltungstechnische Realisierung möglichst einfach ist.

Diese Aufgabe wird dadurch gelöst, daß das zweite Halbleiterschaltelement an die Primärseite des Transformators angeschlossen ist.

Weiterbildungen der Erfindung sind Gegenstand der Unteransprüche.

Das zweite steuerbare Halbleiterschaltelement wird während der Sperrphase des ersten steuerbaren Halbleiterschaltelementes leitend geschaltet und verzögert abgeschaltet und zwar nachdem der Transformator seine Energie an die Last abgegeben hat. Während der Verzögerungszeit kehrt der Transformator seine Magnetisierungsrichtung um und entnimmt dem Sekundärkreis wieder Energie. Diese Energie gibt er zu Beginn der Flußphase wieder an die Primärseite ab.

Besonders vorteilhaft bei der erfindungsgemäßen Schaltungsanordnung für ein freischwingendes Sperrwandler-Schaltnetzteil ist, daß nur Verluste in geringem Maße entstehen, da die Energie zwischen der Primär- und der Sekundärseite des Transformators hin und herpendelt und nahezu nicht vernichtet wird.

Die Erfindung wird im folgenden anhand von neun Figuren und einer konkreten Schaltungsanordnung für ein freischwingendes Schaltnetzteil nach der Erfindung näher erläutert. Gleiche Bezugszeichen werden dabei für gleiche Schaltungsteile verwendet.

Es zeigen:
- FIG 1: Prinzipschaltbild eines bekannten freischwingenden Sperrwandler-Schaltnetzteiles,
- FIG 2: den Signalverlauf bei Vollast-, Teillast- und Leerlaufbetrieb eines Schaltnetzteiles nach FIG 1,
- FIG 3: eine Schaltungsanordnung eines leerlaufsicheren Schaltnetzteiles,
- FIG 4: den Signalverlauf bei Vollast- und Leerlaufbetrieb eines Schaltnetzteiles nach FIG 3,
- FIG 5: eine detaillierte Schaltungsanordnung eines Schaltnetzteiles nach FIG 3,
- FIG 6: eine weitere Schaltungsanordnung eines leerlaufsicheren Schaltnetzteiles,
- FIG 7: eine Schaltungsanordnung eines ersten Ausführungsbeispieles eines leerlaufsicheren Schaltnetzteiles nach der Erfindung,
- FIG 8: eine Schaltungsanordnung eines weiteren Ausführungsbeispieles eines leerlaufsicheren Schaltnetzteiles nach der Erfindung und
- FIG 9: eine Schaltungsanordnung eines weiteren Ausführungsbeispieles eines leerlaufsicheren Schaltnetzteiles nach der Erfindung.

In FIG 1 ist das Prinzipschaltbild eines freischwingenden Sperrwandler-Schaltnetzteiles dargestellt. Das Schaltnetzteil weist einen Transformator Tr mit einer Primärwicklung PW1 und einer dazu durch die Punkte angedeuteten gegensinnig gewickelten Sekundärwicklung SW1 auf. In Reihe zur Primärwicklung PW1 liegt ein steuerbares Halbleiterschaltelement S1, hier beispielsweise ein MOS-FET. An die Reihenschaltung dieser Primärwicklung PW1 und des steuerbaren Halbleiterschaltelementes S1 sind Eingangsklemmen E1, E2 für eine Gleichspannung U_{E} geschaltet. Als Eingangsspannung U_{E} kann gegebenenfalls eine gleichgerichtete und über einem parallel zu den Eingangsklemmen E1, E2 geschalteter Kondensator C1 geglättete Netzspannung vorgesehen werden.

An die Sekundärwicklung SW1 ist eine Gleichrichtereinrichtung GL mit Ausgangsklemmen A1, A2 geschaltet, die mit einer Last R_{L} verbunden sind. Die Gleichrichtereinrichtung GL besteht in der Schaltung nach FIG 1 aus einer zwischen die Sekundärwicklung SW1 und die Ausgangsklemme A1 geschaltete Diode D1 und einem zu den Ausgangsklemmen A1, A2 parallelgeschalteten Kondensator C2.

Die Funktionsweise eines solchen bekannten freischwingenden Sperrwandler-Schaltnetzteiles wird aus FIG 2 deutlich, die den Signalverlauf für die am steuerbaren Halbleiterschaltelement S1 abfallende Spannung U_{DS1}, den durch die Primärwicklung PW1 fließende Strom I₁, die Magnetisierung M des Transformators Tr sowie die Steuerspannung U_{S1} für das erste steuerbare Halbleiterschaltelement S1 bei Vollast (R_{L} = min.), Teillast (min < R_{L} < ∞ ) und Leerlaufbetrieb (R_{L} = ∞ ) hervorgeht. Es ist deutlich zu erkennen das mit Abnehmen der Belastung der Sekundärseite die Arbeitsfrequenz des Schaltnetzteiles ansteigt. Ohne geeignete Maßnahmen kann dieses Ansteigen der Arbeitsfrequenz des Schaltnetzteiles zum Ausfall des primärseitigen steuerbaren Halbleiterschaltelementes führen.

FIG 3 zeigt eine Schaltungsanordnung eines Beispieles eines leerlaufsicheren freischwingenden Sperrwandler-Schaltnetzteiles. Primärseitig entspricht dieses Schaltnetzteil dem Schaltnetzteil nach dem Stand der Technik von FIG 1. Sekundärseitig ist jedoch anstelle der in FIG 1 verwendeten Diode D1 ein zweites steuerbares Halbleiterschaltelement S2, hier ein MOS-FET, mit seiner Laststrecke geschaltet. Es könnte auch ein Bipolartransistor oder Thyristor eingesetzt werden. Der Drainanschluß des MOS-FET ist mit der ersten Klemme SA1 der Sekundärwicklung SW1 und dessen Sourceanschluß mit der Ausgangsklemme A1 des Schaltnetzteiles verbunden. Die Ausgangsklemme A2 des Schaltnetzteiles ist wieder an die zweite Klemme SA2 der Sekundärwicklung SW1 angeschlossen. Zur Ansteuerung des das zweite steuerbare Halbleiterschaltelement S2 bildenden MOS-FETs ist eine Steuereinrichtung ST vorgesehen, durch die eine Steuerspannung U_{S2} zwischen den Gateanschluß und Drainanschluß des MOS-FET gelegt werden kann um den MOS-FET einzuschalten.

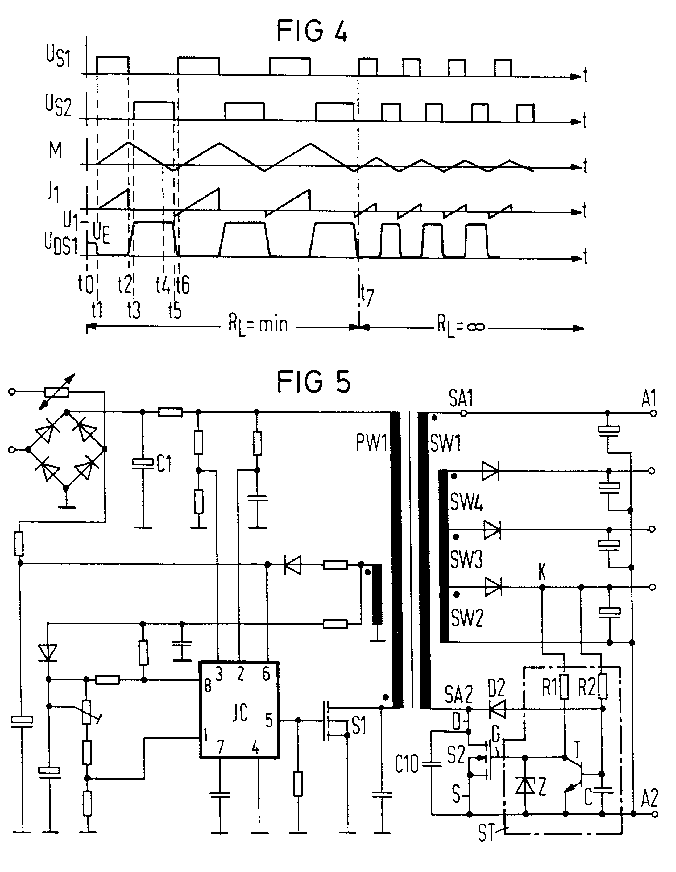

Die Funktionsweise dieses Beispiels eines freischwingenden Sperrwandler-Schaltnetzteils wird anhand der FIG 4 deutlich, die die Signalverläufe der Steuerspannung U_{S1} für das erste steuerbare Halbleiterschaltelement S1, die Steuerspannung U_{S2} für das zweite steuerbare Halbleiterschaltelement S2, die Magnetisierung M des Transformators Tr, den durch das erste steuerbare Halbleiterschaltelement S1 fließenden Strom I₁ sowie die am ersten steuerbaren Halbleiterschaltelement S1 abfallende Spannung U_{DS1} für Maximalbelastung, also R_{L} = min. und Leerlaufbetrieb, also R_{L} = ∞, zeigt. Wenn zum Zeitpunkt t0 die Spannung U_{E} am Eingang des Schaltnetzteiles eingeschaltet wird und zum Zeitpunkt t1 eine Steuerspannung U_{S1} zum Einschalten des ersten steuerbaren Halbleiterschaltelementes S1 an dessen Steueranschluß angelegt wird, so steigt zunächst der Strom I1 durch das erste steuerbare Halbleiterschaltelement S1 und damit die Magnetisierung M im Transformator Tr an. Dies erfolgt so lange, bis die Steuerspannung U_{S1} am Steuereingang des ersten steuerbaren Halbleiterschaltelementes S1 ausgeschaltet wird, hier zum Zeitpunkt t2. Da das erste steuerbare Halbleiterschaltelement S1 anschließend ausgeschaltet ist, kann kein Strom I₁ mehr durch dieses steuerbare Halbleiterschaltelement S1 fließen und die Magnetisierung M des Transformators Tr nimmt ab, d. h. daß sich der Transformator Tr ab dem Zeitpunkt t2 entmagnetisiert. Zugleich steigt die Spannung U_{DS1} am primärseitigen MOS-FET auf etwa den doppelten Wert der Eingangsspannung U_{E}. Gemäß der Erfindung wird innerhalb der abfallenden Flanke der Magnetisierung M des Transformators Tr die Steuerspannung U_{S2} an das zweite steuerbare Halbleiterschaltelement S2 gelegt um die Magnetisierungsrichtung im Transformator Tr umzukehren. Dazu bleibt die Steuerspannung U_{S2} über den Zeitpunkt t4, an dem die Magnetisierung M den Wert 0 erreicht, eingeschaltet. Im Signalverlauf von FIG 4 liegt die Steuerspannung U_{S2} bis zum Zeitpunkt t5 am zweiten steuerbaren Halbleiterschaltelement S2 an. Vom Zeitpunkt t4 bis zum Zeitpunkt t5 wird der Transformator Tr wieder aufmagnetisiert, allerdings jetzt mit umgekehrter Magnetisierungsrichtung. Ab dem Zeitpunkt t5 fällt schließlich die Spannung U_{DS1} bis zum Zeitpunkt t6 und damit bis zum erneuten Einschalten des ersten steuerbaren Halbleiterschaltelementes S1 auf den Wert 0 ab. Zum Zeitpunkt t6 beginnt wieder ein neuer Arbeitszyklus des Schaltnetzteils bei Vollastbetrieb, also R_{L} = min.

Wird zum Zeitpunkt t7 das Schaltnetzteil in Leerlaufbetrieb geschaltet, also R_{L} = ∞, so stellt sich der in FIG 4 auf der rechten Seite dargestellte Signalverlauf ein. Die Flußphasen, also die Zeiten, während das erste steuerbare Halbleiterschaltelement S1 eingeschaltet ist, verkürzen sich, da der Transformator Tr nicht mehr so viel Energie aufnehmen muß. Zugleich werden die Flußphasen kürzer, da im Transformator Tr nicht mehr so viel magnetische Energie abgebaut werden muß. Durch das Einschalten des zweiten steuerbaren Halbleiterschaltelementes S2 mit der Steuerspannung U_{S2} und dessen verzögerten Abschalten, nach dem der Transformator Tr seine Energie an die Last R_{L} abgegeben hat, kehrt der Transformator Tr wieder seine Magnetisierungsrichtung um (vgl. dazu den unter der Nullinie liegenden Magnetisierungsverlauf in FIG 4) und entnimmt dem Sekundärkreis des Schaltnetzteiles wieder Energie. Diese Energie gibt er zu Beginn der Flußphase (also wenn das erste steuerbare Halbleiterschaltelement S1 wieder einschaltet) an die Primärseite des Schaltnetzteiles ab. Die Periodendauer der Arbeitszyklen des Schaltnetzteiles im Leerlaufbetrieb ist damit auf das Vierfache der Verzögerungszeit (also die Zeit zwischen den Zeitpunkten t4 und t5) begrenzt.

Verluste entstehen bei der erfindungsgemäßen Schaltungsanordnung im Gegensatz zu den bisher bekannten Möglichkeiten zur Leerlaufstabilisierung des Schaltnetzteiles nur in geringem Maße, da die magnetische Energie zwischen der Primär- und der Sekundärseite hin und herpendelt und nahezu nicht vernichtet wird.

Eine konkrete Ausführungsform für ein bisher beschriebenes Schaltnetzteil zeigt FIG 5. Dort ist ein freischwingendes Sperrwandler-Schaltnetzteil dargestellt, wie es im wesentlichen bekannt ist. Auf der Primärseite wird ein erstes steuerbares Halbleiterschaltelement von einer Steuereinrichtung IC in bekannter Art und Weise angesteuert. Auf der Sekundärseite des Schaltnetzteiles befinden sich beispielsweise vier Sekundärwicklungen, von denen drei mit den bisher bekannten und üblichen Gleichrichtereinrichtungen GL verbunden sind. Eine der vier Sekundärwicklungen SW1 ist jedoch erfindungsgemäß mit einer Gleichrichtereinrichtung verbunden, die ein zweites steuerbares Halbleiterschaltelement S2 aufweist.

Das zweite steuerbare Halbleiterschaltelement S2 ist hier ein MOS-FET, dessen Sourceanschluß S mit der auf Bezugspotential liegenden Ausgangsklemme A2 des Schaltnetzteiles verbunden und dessen Drainanschluß D an die erste Sekundärwicklung SW1 über die zweite Klemme SA2 geschaltet ist. Angesteuert wird dieses zweite steuerbare Halbleiterschaltelement S2 von einer Steuereinrichtung ST, die zwischen dem Steueranschluß G und dem Sourceanschluß S des MOS-FET geschaltet ist. Die Steuereinrichtung weist eine Zenerdiode Z auf, deren Anodenanschluß mit dem Bezugspotential und deren Kathodenanschluß mit dem Steueranschluß G des MOS-FET verbunden ist und weiterhin einen ersten Widerstand, der zwischen den Steueranschluß G des MOS-FET und einer Klemme K zum Anlegen einer positiven Spannung geschaltet ist. Darüber hinaus ist parallel Zur Zenerdiode Z die Laststrekke eines npn-Bipolartransistors T geschaltet, dessen Emitteranschluß auf Bezugspotential liegt und dessen Basisanschluß mit dem Verbindungspunkt eines RC-Gliedes R2, C verbunden ist, das zwischen die Klemme K und Bezugspotential liegt, wobei die Klemme K an eine Ausgangsklemme für eine gleichgerichtete Ausgangsspannung einer zweiten Sekundärwicklung SW2 des Schaltnetzteiles geschaltet ist. Um den sekundärseitigen MOS-FET einschalten zu können, ist an dessen Drainanschluß der Kathodenanschluß einer Diode D2 angeschlossen, deren Anodenanschluß mit dem Basisanschluß des Bipolartransistors T verbunden ist. Mit dieser Diode D2 wird der Beginn der Einschaltzeit des MOS-FET festgelegt.

Darüber hinaus kann zur Begrenzung der Flankensteilheit der Schaltspannung des MOS-FET ein Kondensator C10 parallel zu dessen Laststrecke geschaltet werden.

Mit einer derartigen Schaltungsanordnung ist es beispielsweise möglich, ein Sperrwandler-Schaltnetzteil für 180 W Leistung zu dimensionieren. Ohne Last, also im Leerlauf nimmt das Schaltnetzteil dann nur etwa 5 W aus dem Versorgungsnetz auf. Die Arbeitsfrequenz des Schaltnetzteiles kann bei maximaler Last bei ca. 30 kHz liegen und im Leerlauf auf etwa 60 kHz begrenzt werden. Bei dem in FIG 5 vorgestellten Schaltnetzteil arbeitet auf der Primärseite ein MOS-FET als Leistungsschalter und auf der Sekundärseite ein MOS-FET als Gleichrichter mit Sperrverzögerung. Die Sperrverzögerungszeit des MOS-FET auf der Sekundärseite wird mit dem RC-Glied R2, C an der Basis des npn-Bipolartransistors T eingestellt.

Weitere Möglichkeiten, die Magnetisierungsrichtung im Transformator Tr gezielt mit einem zweiten steuerbaren Halbleiterschaltelement umzukehren und damit die Leerlauffestigkeit des Schaltnetzteiles zu gewährleisten, werden anhand der folgenden Ausführungsbeispiele im Zusammenhang mit Prinzipschaltbildern vorgestellt.

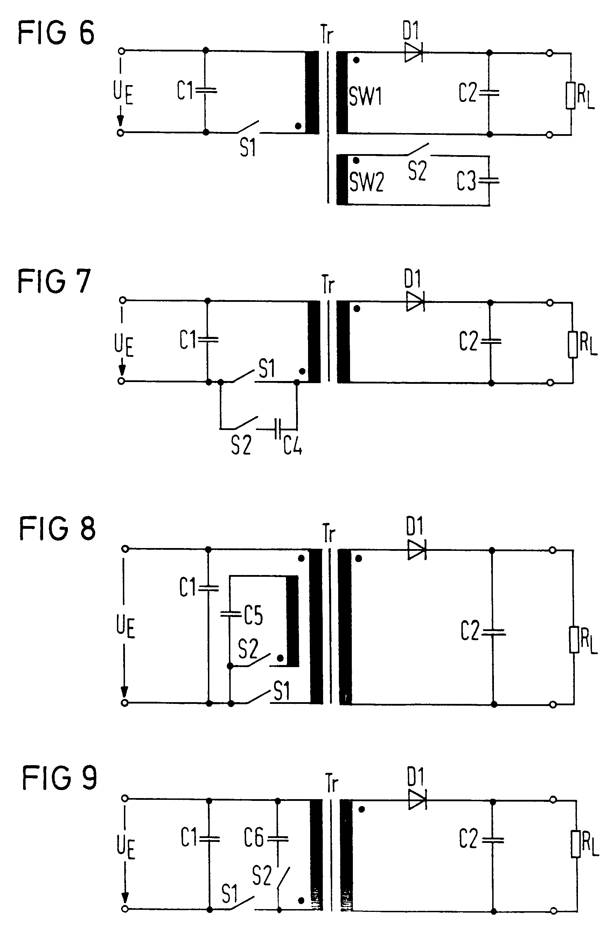

In FIG 6 weist der Transformator Tr neben einer ersten Sekundärwicklung SW1 mit einer bekannten Gleichrichtereinrichtung, bestehend aus der Diode D1 und dem Kondensator C2 sowie daran angeschlossener Last R_{L} eine zweite Sekundärwicklung SW2 auf, zu der in Reihe das zweite steuerbare Halbleiterschaltelement S2 und ein Kondensator C3 geschaltet ist. Die Schaltungsanordnung nach FIG 6 unterscheidet sich also lediglich dadurch von den Schaltungsanordnungen in FIG 3 und 5, daß an den Kondensator C3 keine Last R_{L} geschaltet ist.

In FIG 7 ist parallel zum ersten steuerbaren Halbleiterschaltelement S1 die Reihenschaltung des zweiten steuerbaren Halbleiterschaltelementes mit einem Kondensator C4 geschaltet. Ansonsten entspricht die Schaltungsanordnung des Schaltnetzteiles von FIG 7 bisher bekannten Schaltnetzteilen.

Eine weitere Möglichkeit, die Magnetisierungsrichtung im Transformator Tr umzukehren, bietet ein freischwingendes Sperrwandler-Schaltnetzteil, wie es in FIG 8 dargestellt ist. Dort weist der Transformator Tr eine zweite Primärwicklung PW2 auf, an der die Reihenschaltung des zweiten steuerbaren Halbleiterschaltelementes S2 mit einem Kondensator C5 geschaltet ist und sowohl das erste steuerbare Halbleiterschaltelement S1 als auch das zweite steuerbare Halbleiterschaltelement S2 an gleiches Bezugspotential geschaltet sind. Wird beispielsweise für beide steuerbare Halbleiterschaltelemente S1, S2 jeweils ein MOS-FET eingesetzt, so können deren Sourceanschlüsse auf gemeinsames Bezugspotential gelegt werden. Der Drainanschluß des das erste steuerbare Halbleiterschaltelement S1 bildenden MOS-FETs wird entsprechend an die erste Primärwicklung PW1 zum Anlegen der getakteten Gleichspannung an den Transformator Tr geschaltet, während der Drainanschluß des das zweite steuerbare Halbleiterschaltelement S2 bildenden MOS-FETs an die zweite Primärwicklung PW2 geschaltet ist. Diese Ausführungsform eines erfindungsgemäßen Schaltnetzteiles ist insbesondere deswegen von Vorteil, als eine gemeinsame Steuereinrichtung, beispielsweise ein integrierter Schaltkreis, zu deren Ansteuerung verwendet werden kann.

In einer weiteren Ausführungsform der Erfindung gemäß FIG 9 ist parallel zur ersten Primärwicklung PW1 des Transformators Tr die Reihenschaltung des zweiten steuerbaren Halbleiterschaltelementes S2 mit einem Kondensator C6 geschaltet.

Die hier vorgestellten Schaltungsanordnungen für ein freischwingendes Sperrwandlerschaltnetzteil mit einem zweiten steuerbaren Halbleiterschaltelement S2 zeichnen sich alle durch ihre Leerlauffestigkeit aus. Dabei muß das zweite steuerbare Halbleiterschaltelement S2 innerhalb der Ausschaltzeit des ersten Halbleiterschaltelementes S1 einschalten und dann erst ausschalten, wenn sich die Magnetisierungsrichtung im Transformator Tr umkehrt. Entsprechend der Wahl der Einschaltdauer über den Punkt der Entmagnetisierung des Transformators Tr hinaus, kann die Arbeitsfrequenz des Schaltnetzteiles im Leerlaufbetrieb genau festgelegt werden.

## Patentansprüche

1. Schaltungsanordnung für ein freischwingendes Sperrwandler-Schaltnetzteil mit einem ersten steuerbaren Halbleiterschaltelement (S1) zum getakteten Anlegen einer Gleichspannung (UE) an eine Primärwicklung (PW1) eines Transformators (Tr), der mindestens eine erste Sekundärwicklung (SW1) mit daran angeschlossener Gleichrichtereinrichtung (GL) sowie Ausgangsklemmen (Al, A2) zum Anschluß einer Last (RL) aufweist und der periodisch mit einer vorgegebenen Magnetisierungsrichtung auf- und entmagnetisiert wird, und mit mindestens einem von einer Steuereinrichtung (ST) ansteuerbaren zweiten Halbleiterschaltelement (S2), das innerhalb der Ausschaltzeit des ersten Halbleiterschaltelementes (S1) einschaltbar ist und derart in der Schaltungsanordnung angeordnet ist, daß entsprechend seiner Einschaltdauer die Magnetisierungsrichtung im Transformator (Tr) umkehrbar ist,
**dadurch gekennzeichnet**,
daß das zweite Halbleiterschaltelement (S2) an die Primarseite (PW1) des Transformators (Tr) angeschlossen ist.

2. Schaltungsanordnung nach Anspruch 1,
**dadurch gekennzeichnet**,
daß parallel zum ersten steuerbaren Halbleiterschaltelement (S1) die Reihenschaltung des zweiten steuerbaren Halbleiterschaltelementes (S2) mit einem Kondensator (C4) geschaltet ist.

3. Schaltungsanordnung nach Anspruch 1,
**dadurch gekennzeichnet**,
daß der Transformator (Tr) eine zweite Primärwicklung (PW2) aufweist, an der die Reihenschaltung des zweiten steuerbaren Halbleiterschaltelementes (S2) mit einem Kondensator (C5) geschaltet ist und sowohl das erste steuerbare Halbleiterschaltelement (S1) als auch das zweite steuerbare Halbleiterschaltelement (S2) an gleiches Bezugspotential geschaltet sind.

4. Schaltungsanordnung nach Anspruch 1,
**dadurch gekennzeichnet,**
daß parallel zur ersten Primärwicklung (PW1) des Transformators (Tr) die Reihenschaltung des zweiten steuerbaren Halbleiterschaltelementes (S2) mit einem Kondensator (C6) geschaltet ist.

5. Schaltungsanordnung nach einem der Ansprüche 1 bis 4,
**dadurch gekennzeichnet,**
daß mindestens eines der steuerbaren Halbleiterschaltelemente (S1, S2) ein Bipolartransistor, ein Thyristor oder ein MOSFET ist.

## Claims

1. Circuit arrangement for a free-running flyback-converter switched-mode power supply having a first controllable semiconductor switching element (S1) for pulsed application of a DC voltage (UE) to a primary winding (PW1) of a transformer (Tr) which has at least one first secondary winding (SW1) with a rectifier device (GL) connected thereto, as well as output terminals (A1, A2) for the connection of a load (RL) and which is magnetized and demagnetized cyclically with a predetermined magnetization direction, and having at least one second semiconductor switching element (S2) which can be driven by a control device (ST), can be switched on during the time in which the first semiconductor switching element (S1) is switched off and is arranged in the circuit arrangement in such a manner that the magnetization direction of the transformer (Tr) can be reversed corresponding to the switching-on duration of said second semiconductor switching element (S2), characterized in that the second semiconductor switching element (S2) is connected to the primary (PW1) of the transformer (Tr).

2. Circuit arrangement according to Claim 1, characterized in that the series circuit of the second controllable semiconductor switching element (S2) and the capacitor (C4) is connected in parallel with the first controllable semiconductor switching element (S1).

3. Circuit arrangement according to Claim 1, characterized in that the transformer (Tr) has a second primary winding (PW2) to which the series circuit of the second controllable semiconductor switching element (S2) and a capacitor (C5) is connected, and both the first controllable semiconductor switching element (S1) and the second controllable semiconductor switching element (S2) are connected to the same reference potential.

4. Circuit arrangement according to Claim 1, characterized in that the series circuit of the second controllable semiconductor switching element (S2) and the capacitor (C6) are connected in parallel to the first primary winding (PW1) of the transformer (Tr).

5. Circuit arrangement according to one of Claims 1 to 4, characterized in that at least one of the controllable semiconductor switching elements (S1, S2) is a bipolar transistor, a thyristor or a MOSFET.

## Revendications

1. Montage pour une alimentation à découpage à récupération et à oscillations libres, comportant un premier élément (S1) d'interruption à semiconducteurs commandable destiné à appliquer de façon cadencée une tension continue (UE) à un enroulement primaire (PW1) d'un transformateur (Tr), qui comprend au moins un premier enroulement secondaire (SW1) ayant un dispositif (GL) redresseur y connecté ainsi que des bornes (A1, A2) de sortie destinées au raccordement d'une charge (RL) et qui est magnétisé et démagnétisé périodiquement dans une direction de magnétisation prescrite, et comportant au moins un second élément (S2) d'interruption à semiconducteurs, qui est susceptible d'être commandé par un dispositif (ST) de commande, qui est susceptible d'être mis à l'état conducteur pendant le temps de débranchement du premier élément (S1) d'interruption à semiconducteurs et qui est disposé dans le montage, de telle sorte que la direction de magnétisation dans le transformateur (Tr) puisse être inversée en fonction de sa durée de conduction,
caractérisé en ce que
le second élément (S2) d'interruption à semi-conducteurs est connecté au côté (PW1) primaire du transformateur (Tr).

2. Montage suivant la revendication 1,
caractérisé en ce que
le montage en série du second élément (S2) commandable d'interruption à semiconducteurs avec un condensateur (C4) est branché en parallèle au premier élément (S1) commandable d'interruption à semi-conducteurs.

3. Montage suivant la revendication 1,
caractérisé en ce que
le transformateur (Tr) comporte un second enroulement primaire (PW2), auquel est branché le montage en série du second élément (S2) commandable d'interruption à semi-conducteurs avec un condensateur (C5) et à la fois le premier élément (S1) commandable d'interruption à semi-conducteurs et le second élément (S2) commandable d'interruption à semi-conducteurs sont branchés au même potentiel de référence.

4. Montage suivant la revendication 1,
caractérisé en ce que
le montage en série du second élément (S2) d'interruption à semi-conducteurs avec un condensateur (C6) est branché en parallèle au premier enroulement primaire (PW1) du transformateur (Tr).

5. Montage suivant l'une des revendications 1 à 4,
caractérisé en ce que
au moins un des éléments (S1, S2) commandables d'interruption à semiconducteurs est un transistor bipolaire, un thyristor ou un MOSFET.
